# EUROPEAN PATENT SPECIFICATION

(11) **EP 0 804 958 B1**
(45) Date of publication and mention of the grant of the patent: **16.08.2001**
(21) Application number: 96107006.7
(22) Date of filing: 03.05.1996
(51) Int. Cl.: B01D 46/00, B01D 46/06

(54) **A sack filter**
Taschenfilter
Filtre à poches

(43) Date of publication of application: 05.11.1997
(73) Proprietor: IDR HOLDING S.A., 2086 Luxembourg (LU)
(72) Inventor: Marchi, Germano, I-41032 Cavezzo (MO) (IT)
(74) Representative: Lanzoni, Luciano

(56) References cited:
- DE-A- 4 111 789
- DE-U- 7 140 425
- FR-A- 2 318 669
- FR-A- 2 325 414

## Description

The prior art relating to filters for the extraction of dusts from gases comprises sack filters essentially constituted by a container enclosing a battery of sacks made of a filtering material, which sacks are arranged reciprocally parallel and are mounted on a square support plate which doubles as a lid for the container. The edge describing the mouth of each sack is fixed to a frame in turn fixed to the support plate. The plate exhibits a plurality of longitudinal parallel apertures to each of which a frame of a single sack is fixed. Further, a rigid net structure is usually arranged internally of each sack to prevent the walls thereof from coming into reciprocal contact without for that obstucting in any way the passage of the filtered gas.

This gas (dusty air, smoke etc.) is introduced into the container and, after filtering, exits from the sack mouths; the filtered detritus is collected at the bottom of the container.

FR-A-2 325 414 discloses the features of the preamble of claim 1. It is addressed to the problems of developing a filter set with which any area, especially the cross sections of existing duct systems, can be most simply covered, and by whose use an absolutely leak-proof mounting of the filter medium is assured. FR 2 325 414 solves this problem by a filter set, for use in existing filter walls and especially in duct systems of ventilating installations, comprising an entire filter element consisting of a varying number of known filter pockets into which flexible trapezoidal reinforcing inserts are welded and which are fastened releasably or permanently at the front end to a square head frame, and a filter element of the same construction in which, however, the dimensions of the head frame are reduced such that four of these filter elements attain the size of the head frame of the first filter element when they are joined together by an interposed joining piece of appropriate cross-sectional shape, in a dust-tight manner. DE-U-71 40 425, which relates to the field of filter sacks, teaches to embed the sacks around the apertures in the material of which the support of the sacks is made.

Known-type sack filters of the above-described type present, however, some drawbacks.

A first of these is that the available filtering surface, in relation to the overall filter mass, has an upper limit which depends on constructional factors, as the support plate can only bear a certain quite small number of frames, and therefore only a similarly limited number of sacks.

Secondly, known-type filters are constructively complex, expensive and laborious to manufacture.

The main aim of the present invention is to obviate the above-mentioned limits and drawbacks in the prior art by providing a sack filter, constructionally simple and economical, which is provided with an air-contact surface per unit of volume which is larger than that of existing filters.

Some advantages of the present invention are its compactness, its simplicity of manufacture and installation, the fact that sacks can be fitted very closely ranked in relation to the size of the support plate therefor, the fact that a single sack can be closed (when worn or broken) without significantly compromising the total delivery rate and functionability of the filter.

The invention also advantageously enables the sacks to be mounted on the support plate at a reciprocal distance which is the minimum distance below which free air passage would not be possible between one sack and a next; below such limit the density of sacks would cause a drastic reduction in the volume of air filtered.

These aims and others besides are all attained by the filter of the invention, as it is characterized in the claims that follow.

Further characteristics and advantages of the present invention will better emerge from the detailed description that follows, of an embodiment of the invention, illustrated in the form of a non-limiting example in the accompanying drawings, in which:

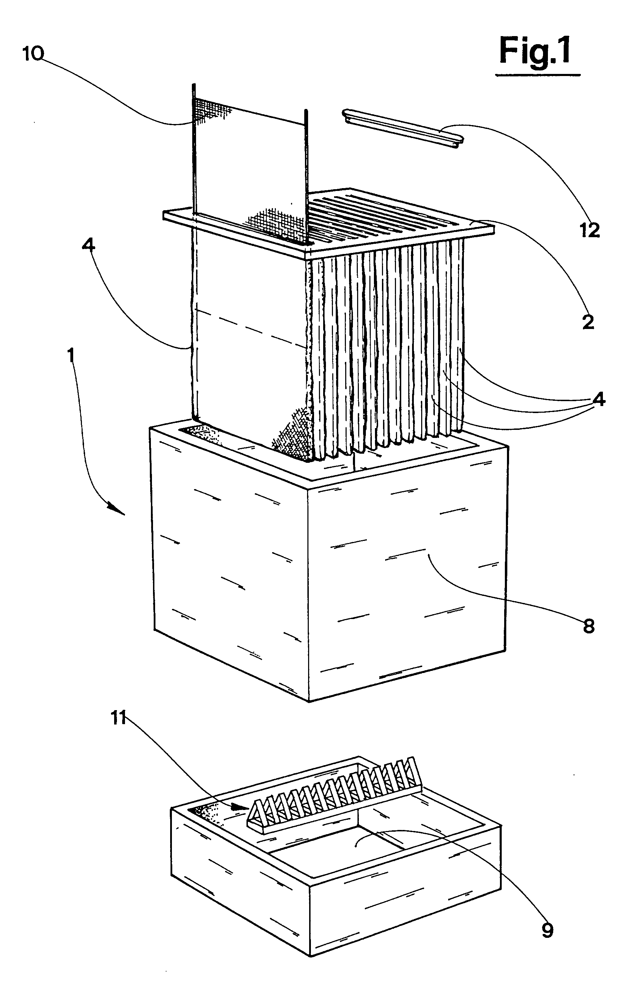

figure 1 shows an exploded schematic perspective view of the filter;

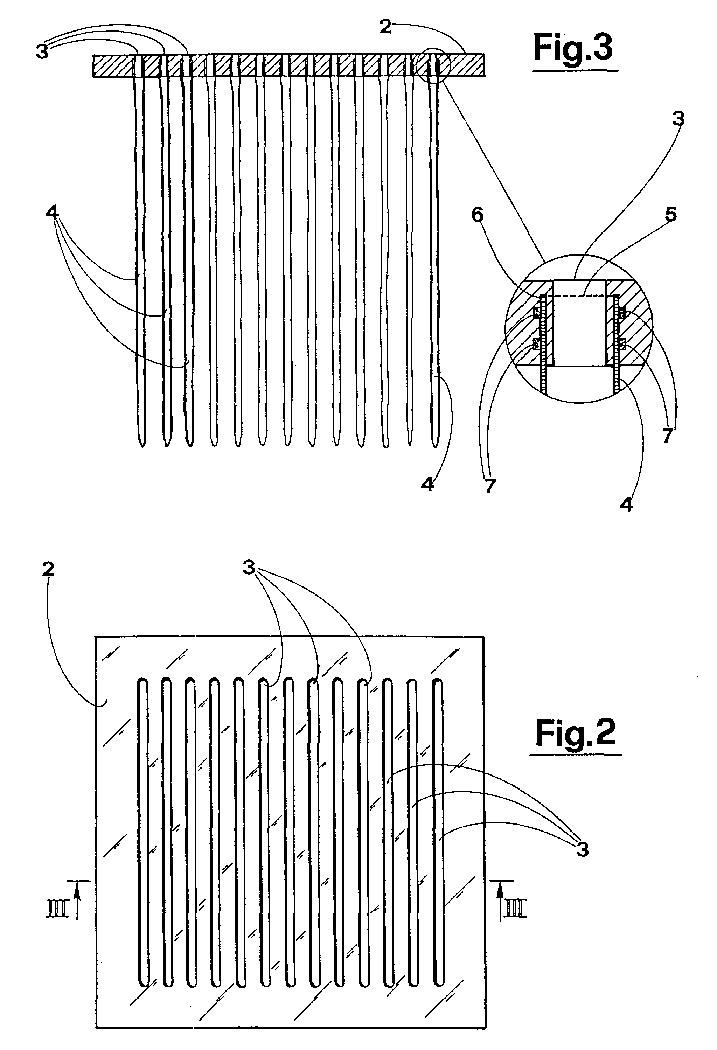

figure 2 shows a schematic frontal view of the sack support plate;
figure 3 is a section made according to line III-III of figure 2.

With reference to the figures of the drawings, 1 denotes in its entirety a sack filter, comprising a rectangular support plate 2, on which surface a plurality of parallel narrow and elongate apertures 3 are afforded. The support plate 2 is made of a plastic material which is stably solid in atmospheric conditions, for example polyeurethane. The filter 1 comprises a plurality of sacks 4, flat and reciprocally parallel, each associated to an aperture 3, each having a mouth 5 facing said aperture 3 and being made of a filtering material.

The edge 6 of the mouth 5 of each sack 4 is embedded in the material of the support plate 2 at a perimeter zone of a respective aperture 3, such that the sack 4 is solidly anchored to the support plate 2. The support plate 2 and the sacks 4 thus form a single piece which can be manufactured extremely simply in comparison to sack filters of known type, for example by moulding or casting of the plastic material.

To obtain a better anchoring of the sacks to the support plate 2, as well as to prevent lacerations of the apertures 3 in proximity of the anchoring zone, the embedded edge 6 is preferably perpendicular to the support plate 2 and parallel to the walls describing the relative aperture 3 on the support plate 2. The depth to which the edge 6 is embedded, measured normally to the walls of the aperture 3, is about the same as the breadth of the filtering cloth of the sack 4.

The embedding of the edges 6 of the mouths 5 of the sacks 4 into the plastic is realized, for example, by means of insertion of said edges 6 into the moulding cavity of the die for the support plate 2, before molten plastic is introduced into the die. After solidification of the plastic material, the sacks 4 are solidly anchored to the support plate 2 material. To enhance the anchoring between the material of the support plate 2 and the edges 6 of the sacks 4, the sacks 4 exhibit projections 7, constituted for example by metal bosses solidly fixed to the material of the sacks 4. To improve still more the anchoring of the sacks to the plastic material, once the support plate 2 has solidified, further fixing means, such as metal clips, can be applied.

The rectangular support plate 2 is mounted on a container 8 provided with an inlet 9. The support plate 2 functions as a lid for the container 8.

The battery of sacks 4, when the support plate 2 is mounted on the container 8, is contained internally of the container 8. A rigid net structure 10 is arranged internally of each sack 4 to prevent the walls of the sack 4 from reciprocally contacting, without at the same time obstructing the passage of the filtered air. Also arranged internally of the container 8 are means 11 for keeping the sacks 4 stretched and elongate, which means 11 are operatively associated with the ends of the sacks 4 opposite to the mouths 5 thereof.

The filter 1 further comprises a plurality of lids 12, which can be used to close one or more of the apertures 3 when necessary.

During functioning, the gas to be filtered (smoke, dusty air etc.) is introduced internally of the container 8 through the inlet 9, and exits, after filtering, through the mouths 5 of the sacks 4.

Thanks to the single unified structure formed by the support plate 2 and the battery of sacks 4, a high number of sacks 4 can be mounted on the support plate 2, so that a large filtering surface is obtained in relation to the total volume of the filter 1.

Obviously it is still necessary to leave a free space between one sack 4 and another sufficient to allow passage of the air to be filtered. It is, however, also true that with the present invention this minimum free space no longer depends on constructional reasons deriving from the considerable lateral mass of the frames used up to the present day for supporting the single sacks, but only on the space necessary for the free passage of the air. The frames previously used do not in fact figure in the present invention: indeed, it can be stated that one of the most important advantages of the present invention is the fact that with respect to the prior art the filter frame is not present, its sack-supporting role having been obviated by the fact of embedding a portion of the sacks in the plastic material of which the support plate 2 is made - a fact which also enormously simplifies manufacture of the filter.

Given the high number of filtering sacks 4, in cases of breakage or wear of one or more sacks 4, it is possible to deactivate such sacks 4 by closing the relative apertures 3 with the lids 12, without causing a resulting significant loss of total potential of the filter.

## Claims

1. A sack filter, comprising: a support plate (2) on a surface of which a plurality of apertures (3) is arranged; a plurality of sacks (4), each of which is associated to an aperture (3) of the plurality of apertures (3), which sacks (4) are made of a filtering cloth and each of which sacks (4) is provided with a mouth (5) disposed in a position facing said aperture (3); characterized in that an edge (6) of said mouth (5) of each of said sacks (4) is embedded in a material of which said support plate (2) is made, at a perimeter zone of the aperture (3), such that said sacks (4) are solidly anchored to said support plate (2); the edge (6) of the mouth (5) of each of the sacks (4) being provided with projections (7) for enhancing an anchoring between said edge (6) and the material of the support plate (2).

2. A filter as in claim 1, characterized in that said support plate (2) is realized in a plastic material which is stably solid in atmospheric conditions.

3. A filter as in any one of the preceding claims, characterized in that it comprises a plurality of lids (12) conformed in such a way as to close one or more of said apertures (3) should this be required.

4. A filter as in any one of the preceding claims, characterized in that the edge (6) of the mouth (5) of each sack (4), which is embedded in the material of the support plate (2), is perpendicular to the support plate (2) and parallel to the walls describing the apertures (3) on the support plate (2).

5. A filter as in claim 4, characterized in that a depth to which said edge (6) is embedded in said support plate (2), measured in a normal direction to said walls describing said apertures (3), is of about a same measurement as a breadth of a filtering surface of said sack (4).

## Patentansprüche

1. Taschenfilter, enthaltend: eine Trägerplatte (2), an deren einer Oberfläche eine Anzahl von Öffnungen (3) angeordnet sind; eine Anzahl von Taschen (4), von denen jede einer Öffnung (3) der Anzahl von Öffnungen (3) zugeordnet ist, welche Taschen (4) aus einem Filtergewebe hergestellt sind und jede Tasche (4) mit einer Füllöffnung (5) versehen ist, angeordnet in einer der genannten Öffnung (3) zugewandten Position; **dadurch gekennzeichnet,** dass eine Kante (6) der genannten Füllöffnung (5) einer jeden der genannten Taschen (4) in einem Material eingebettet ist, aus welchem die genannte Trägerplatte (2) hergestellt ist, und zwar in einem Umlaufbereich der Öffnung (3), so dass die genannten Taschen (4) fest an der genannten Trägerplatte (2) verankert sind; wobei die Kante (6) der Einfüllöffnung (5) eines jeden der Säcke (4) mit Vorsprüngen (7) versehen ist, um eine Verbindung zwischen der genannten Kante (6) und dem Material der Trägerplatte (2) zu verbessern.

2. Filter nach Patentanspruch 1, **dadurch gekennzeichnet,** dass die genannte Trägerplatte (2) aus einem Kunststoffmaterial hergestellt ist, welches Umwelteinflüssen gegenüber gleichbleibend widerstandsfähig ist.

3. Filter nach einem beliebigen der vorstehenden Patentansprüche, **dadurch gekennzeichnet,** dass er eine Anzahl von Deckeln (12) enthält, die auf solche Weise ausgebildet sind, dass sie eine oder mehrere der genannten Öffnungen (3) verschliessen, falls dies erforderlich sein sollte.

4. Filter nach einem beliebigen der vorstehenden Patentansprüche, **dadurch gekennzeichnet,** dass die Kante (6) der Einfüllöffnung (5) einer jeden Tasche (4), welche in das Material der Trägerplatte (2) eingebettet ist, lotrecht zu der Trägerplatte (2) und parallel zu den Wänden verläuft, welche die Öffnungen (3) an der Trägerplatte (2) beschreiben.

5. Filter nach Patentanspruch 4, **dadurch gekennzeichnet,** dass die Tiefe, mit welcher die genannte Kante (6) in die genannte Trägerplatte (2) eingebettet ist, gemessen in einer normalen Richtung zu den genannten, die genannten Öffnungen (3) beschreibenden Wänden, etwa die gleiche Abmessung hat wie eine Weite einer Filterfläche der genannten Tasche (4).

## Revendications

1. Un filtre à poches, comprenant: une plaque de support (2) sur la surface de laquelle est prédisposée une pluralité d'ouvertures (3); une pluralité de poches (4), chacune desquelles étant associée à une ouverture (3) de la pluralité d'ouvertures (3), lesquelles poches (4) sont réalisées dans une toile filtrante et chacune d'entre elles étant pourvue d'une entrée (5) disposée dans une position faisant face à ladite ouverture (3); caractérisé en ce qu'un bord (6) de ladite entrée (5) de chacune desdites poches (4) est noyé dans un matériau duquel est constituée la plaque de support (2), dans une zone périmétrique de l'ouverture (3), de manière à ce que lesdites poches (4) sont solidement ancrées à ladite plaque de support (2); le bord (6) de l'entrée (5) de chacune des poches (4) étant pourvu de saillies (7) servant à consolider un ancrage entre ledit bord (6) et la matériau de la plaque de support (2).

2. Un filtre selon la revendication 1, caractérisé en ce que ladite plaque de support (2) est réalisée dans une matière plastique solide de manière stable quand elle est soumise aux conditions athmosphériques.

3. Un filtre selon n'importe laquelle des revendications précédentes, caractérisé en ce qu'il comprend une pluralité de couvercles (12) conformés de manière à fermer une ou plusieurs desdites ouvertures (3) si cela se révélait nécessaire.

4. Un filtre selon n'importe laquelle des revendications précédentes, caractérisé en ce que le bord (6) de l'entrée (5) de chaque poche (4), noyé dans le matériau de la plaque de support (2), est perpendiculaire à la plaque de support (2) et parallèle aux parois qui délimitent les ouvertures (3) sur la plaque de support (2).

5. Un filtre selon la revendication 4, caractérisé en ce que la profondeur selon laquelle ledit bord (6) est noyé dans ladite plaque de support (2), mesurée dans une direction perpendiculaire auxdites parois délimitant lesdites ouvertures (3), est environ du même ordre de grandeur que l'épaisseur d'une surface filtrante de ladite poche (4).
